(19) Europäisches Patentamt
European Patent Office
Office européen des brevets

(11) EP 0 496 598 B1

(12) EUROPEAN PATENT SPECIFICATION

(45) Date of publication and mention of the grant of the patent: **02.04.1997 Bulletin 1997/14**

(51) Int Cl.[6]: **C08K 3/22**, C08K 3/36, C08L 83/04, C08K 9/06

(21) Application number: **92300546.6**

(22) Date of filing: **22.01.1992**

# (54) Silicone rubber compositions

Silikon-Kautschukzusammensetzung

Composition de caoutchouc de silicone

(84) Designated Contracting States: **DE FR GB**

(30) Priority: **22.01.1991 JP 21650/91**

(43) Date of publication of application: **29.07.1992 Bulletin 1992/31**

(73) Proprietor: **SHIN-ETSU CHEMICAL CO., LTD. Chiyoda-ku Tokyo (JP)**

(72) Inventors:
- **Okinoshima, Hiroshige Annaka-shi, Gunma-ken (JP)**
- **Shiobara, Toshio Annaka-shi, Gunma-ken (JP)**
- **Kashiwagi, Tsutomu Annaka-shi, Gunma-ken (JP)**

(74) Representative: **Stoner, Gerard Patrick et al**
**MEWBURN ELLIS**
**York House**
**23 Kingsway**
**London WC2B 6HP (GB)**

(56) References cited:
**EP-A- 0 234 271**
**EP-A- 0 284 340**
**EP-A- 0 456 557**
**US-A- 4 382 057**
**US-A- 4 705 762**

- **PATENT ABSTRACTS OF JAPAN vol. 016, no. 063 (C-911) 19 November 1991**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 496 598 B1

## Description

This invention relates to silicone rubber compositions, their use in the protective coating of electronic or electric parts, and cured products thereof.

Conventional silicone rubber compositions are typically loaded with such fillers as crystalline silica and fused silica. Since these silica fillers contain ionic impurities, they have a purity problem when used in silicone rubber compositions intended for forming protective coats on electronic and electric parts. Furthermore, silicone rubber compositions can not be loaded with large amounts of silica fillers, partly because silica tends to cause a lowering of flow by its configurational factor, imposing a certain limit on the loading, and partly because separation often occurs between the silica filler and the resin component because of relatively large particle size. For these reasons, conventional silicone rubber compositions are not optimal as protective coating compositions for electronic and electric parts.

EP-A-234271 describes addition-curing silicone rubber compositions comprising combined zinc and magnesium oxides as filler. The filler confers high thermal conductivity on the rubber, making it useful as a fuser roll coating for an electrostatic copier. Alumina and ferric oxide may also be included in the filler.

The general problem addressed herein is to provide novel silicone rubber compositions, as well as preparation methods and use thereof.

In a preferred aspect, we aim to provide an improved silicone rubber composition which is free of undesirable impurities and well flowing, which cures into products having improved electrical and mechanical properties, heat resistance, and humidity resistance, and which is thus optimum as protective coating compositions for electronic and electric parts.

The inventors have found that metal oxide fine particles obtained by deflagration of metal powder dust in an oxygen - containing atmosphere are highly pure, owing to a minimal content of ionic impurities. They are fine particles of spherical or polyhedral shape ensuring good flowing nature. Thus they can be added to silicone rubber compositions in large amounts. In our work, we have found that silicone rubber compositions loaded with such metal oxide fine particles manifest favorable flow and high purity, and cured products thereof have improved electrical and mechanical properties, a low coefficient of thermal expansion, heat resistance, and humidity resistance. The loaded silicone rubber compositions are suited for forming protective coats on electronic and electric parts for keeping the parts reliable.

Therefore, the present invention provides a silicone rubber composition, e.g. for the protective coating of electronic and electric parts, having blended therein a filler in the form of metal oxide particles, of mean particle size from 0.01 to 20 µm, obtained by deflagration of metal powder in an oxygen-containing atmosphere. A cured product of this loaded silicone rubber composition is also contemplated herein, as well as a method of making the composition and its use for the coating of electric and electronic components.

More particularly, the silicone rubber composition of the present invention is comprised of a silicone rubber base and a specific filler. The silicone rubber base is usually defined as including an organopolysiloxane, an organohydrogenpolysiloxane, and an addition reaction catalyst.

A first component which constitutes the silicone rubber composition is an organopolysiloxane.
Preferred are vinyl - containing diorganopolysiloxanes having at least two $CH_2$=CH - Si ≡ bonds in their molecule. In the vinyl - containing diorganopolysiloxanes, the vinyl groups may be attached to the backbone only at the ends or at the ends and an intermediate position. The vinyl - containing diorganopolysiloxanes are typically of the following formula (1):

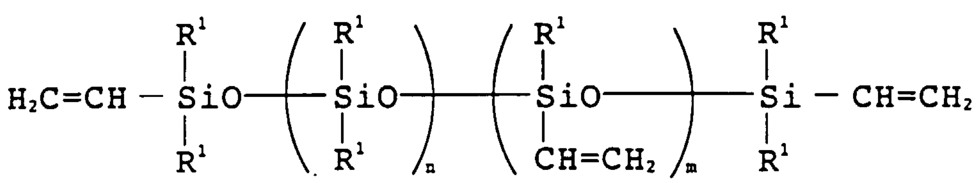

....(1)

wherein $R^1$ is independently selected from subtituted or unsubstituted monovalent hydrocarbon groups free of an aliphatic unsaturated bond, letter n is equal to 0 or a positive integer, and m is equal to 0 or a positive integer.

More particularly, substituents $R^1$, which may be identical or different, are selected from substituted or unsubstituted monovalent hydrocarbon groups free of an aliphatic unsaturated bond, preferably having 1 to 10 carbon atoms, more preferably 1 to 6 carbon atoms, for example, lower alkyl groups such as methyl, ethyl, propyl, and butyl groups; aryl groups such as phenyl, tolyl, xylyl, and benzyl groups; cycloalkyl groups such as a cyclohexyl group; and substituted

ones of these groups in which some or all of the hydrogen atoms are replaced by halogen atoms, cyano groups or the like, such as chloromethyl, cyanoethyl, and 3,3,3 - trifluoropropyl groups. Letter n is equal to 0 or a positive integer and m is equal to 0 or a positive integer, and preferably n and m are numbers meeting $0 < n + m \leqq 10{,}000$, more preferably $0 < n + m \leqq 2{,}000$ and $0 < m/(n + m) \leqq 0.2$.

Preferably, the diorganopolysiloxanes of formula (1) have a viscosity of 10 to 1,000,000 centistokes (cs) at 25°C.

A second component is an organohydrogenpolysiloxane which preferably has at least two hydrogen atoms directly attached to silicon atoms in its molecule. Preferred are organohydrogenpolysiloxanes of the following formula (2):

$$H_aR^2_bSiO_{(4-a-b)/2} \qquad (2)$$

wherein $R^2$ is independently selected from substituted or unsubstituted monovalent hydrocarbon groups free of an aliphatic unsaturated bond, letters a and b are numbers meeting $0 < a < 2$, $1 \leqq b \leqq 2$, and $2 \leqq a + b \leqq 3$.

More particularly, substituents $R^2$, which may be identical or different, are selected from substituted or unsubstituted monovalent hydrocarbon groups free of an aliphatic unsaturated bond, preferably having 1 to 10 carbon atoms, more preferably 1 to 7 carbon atoms, for example, such as described for $R^1$, typically, lower alkyl groups such as methyl and aryl groups such as phenyl. Letters a and b are numbers meeting $0 < a < 2$, $1 \leqq b \leqq 2$, and $2 \leqq a + b \leqq 3$, preferably numbers meeting $0.3 \leqq a \leqq 1$ and $2 \leqq a + b \leqq 2.7$.

These organohydrogenpolysiloxanes may be obtained either by hydrolysis of chlorosilanes such as $R^2SiHCl_2$, $R^2_3SiCl$, $R^2_2SiCl_2$, and $R^2_2SiHCl$, or by further equilibration of siloxanes resulting from such hydrolysis. Some illustrative examples are given below.

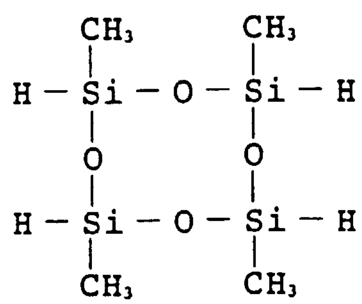

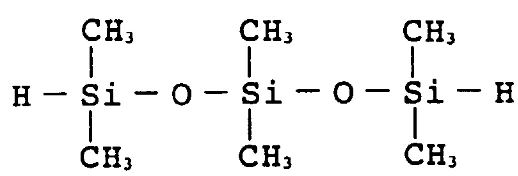

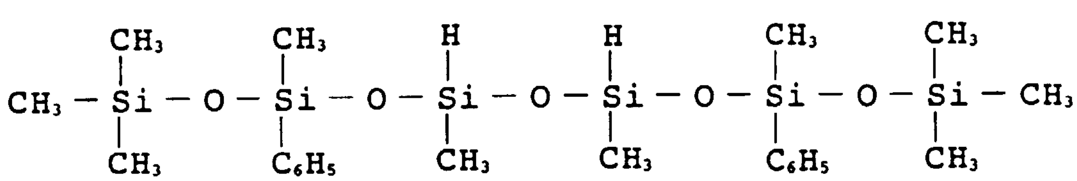

The second component or organohydrogenpolysiloxane is used in any desired amount, preferably in such an amount that there are available 1.5 to 4 hydrogen atoms from the organohydrogenpolysiloxane per vinyl group in the diorganopolysiloxane as the first component.

A third component is an addition reaction catalyst which is typically platinum or a platinum compound. Any of platinum catalysts commonly used in silicone rubber compositions of this type may be used insofar as it can catalyze the addition reaction between a silicon-attached vinyl group of the vinyl - containing organopolysiloxane as the first

component and a silicon - attached hydrogen atom of the organohydrogenpolysiloxane as the second component. Examples of the platinum catalyst include elemental platinum, $H_2PtCl_6 \cdot nH_2O$, $NaHPtCl_6 \cdot nH_2O$, $KHPtCl_5 \cdot nH_2O$, $Na_2PtCl_5 \cdot nH_2O$, $K_2PtCl_5 \cdot nH_2O$, $PtCl_4 \cdot nH_2O$, $PtCl_2$, $Na_2PtCl_4 \cdot nH_2O$, and $H_2PtCl_4 \cdot nH_2O$. Also useful are complexes of these platinum compounds with hydrocarbons, alcohols, and vinyl - containing cyclic siloxane.

The addition reaction catalyst may be added in a catalytic amount. For example, platinum or a platinum compound is used in an amount of about 0.1 to 100 ppm of Pt based on the total weight of the first and second organopolysiloxane components.

A rubber base comprising the first to third components defined above is loaded with a specific filler in the form of metal oxide fine particles obtained by deflagration of metal powder dust in an oxygen - containing atmosphere. Then there is obtained a silicone rubber composition well suited in forming reliable protective coats on electronic and electric parts. The metal oxide fine particles may be produced by the method described in US-A- 4,705,762 or JP-A-255602/1985, for example. The method involves charging a reactor with a reaction gas containing oxygen, dispersing metal powder in the reaction gas to create a dust cloud of high concentration, and igniting the cloud using a suitable ignition source such as arc, plasma and chemical flame, thereby incurring deflagration or rapid auto-combustion of metal powder. There results a cloud of metal oxide fine particles, which can be charged and collected by means of an electric precipitator. The reaction gas may consist of 20 to 100% by volume of oxygen and 80 to 0% by volume of an inert gas such as argon, helium and nitrogen gases.

It is desired that the metal powder subject to deflagration have a particle size as small as possible, typically up to 400 μm, preferably up to 100 μm, more preferably 5 to 50 μm. The type of metal powder may be selected in accordance with the desired filler type form, for example, aluminum, silicon, manganese, niobium, zirconium, titanium, magnesium, and iron. Among others, aluminum, silicon, and-zirconium are preferred since alumina, silica, mullite, and zirconium oxide are preferred fillers for silicone rubber compositions intended for the protective coating of electronic and electric parts.

A dust cloud of metal powder is preferably formed by introducing a reaction gas into the reactor with metal powder carried thereon. In this regard, the concentration of metal powder in the dust cloud is generally at least 20 $g/m^3$, often at least 500 $g/m^3$, most often at least 1000 $g/m^3$ of metal. The upper limit may be 50 $kg/m^3$. A higher concentration of metal powder in the dust cloud is preferred for steady ignition.

When a dust cloud of metal powder is ignited, thermal energy is imparted to the surface of metal particles, the surface temperature of metal particles rises, and metal vapor spreads from the metal particle surface. The spreading metal vapor mixes with the reaction gas, generating igniting flames. As the metal vapor mixes with the reaction gas, ignition propagates in chain fashion. At this point, metal particles themselves burst and scatter, promoting flame propagation. At the end of deflagration, the metal oxide gas is spontaneously cooled while metal oxide fragments grow into fine particles of spherical or polyhedral shape having a mean particle size of about 0.01 to 20 μm. It is to be noted that a mean particle size of about 0.3 to 15 μm is advantageous as the filler for silicone rubber compositions.

Since metal oxide fine particles resulting from deflagration are particles that have grown during the spontaneous cooling process, they are characterized by higher surface activity than conventional spherical particles which are fused and form spheres at high temperatures. For example, spherical silica fine particles synthesized by deflagration have a multiplicity of active silanol groups on the surface.

In order to further enhance the interfacial bonding between metal oxide fine particles and silicone resin, it is desired that the metal oxide fine particles be directly surface treated with an organic silicon compound. Such surface treatment is advantageously carried out by using the organic silicon compound having the following formula (3) or (4) and injecting it into the reactor immediately after metal oxide fine particles are produced therein by deflagration as mentioned above. Since the metal oxide fine particles are then quite active on their surface, more effective surface treatment is accomplished.

$$R^3_nSi\,(OR^4)_{4-n} \qquad (3)$$

wherein $R^3$ represents a monovalent organic group having 1 to 20, preferably 1 to 12 carbon atoms and containing an epoxy group, acryl group, methacryl group, amino group or mercapto group, or an unsubstituted or substituted, unsaturated or saturated monovalent hydrocarbon group having 1 to 10 carbon atoms, $R^4$ represents a lower alkyl group or alkoxyalkyl group having 1 to 6 carbon atoms, and n is an integer of 1 to 3.

$$R^5_3SiNHSiR^5_3 \qquad (4)$$

wherein $R^5$ represents an unsubstituted or substituted, unsaturated or saturated monovalent hydrocarbon group having

1 to 10 carbon atoms, $R^5$'s are identical or different.

Examples of the organic silicon compound used in surface treatment are given below. These compounds or hydrolysates thereof may be used alone or in admixture of two or more.

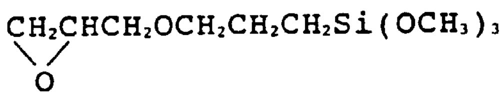 , 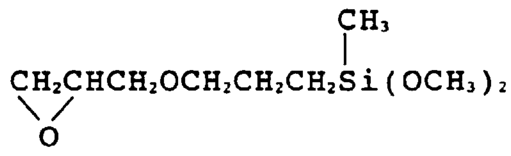 ,

$NH_2CH_2CH_2CH_2Si(OCH_3)_3$ ,

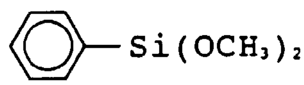 ,

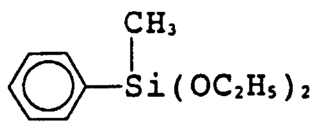 ,

$(CH_3)_3SiHNSi(CH_3)_3$ , $CH_3Si(OCH_3)_3$ , $(CH_3)_2Si(OCH_3)_2$ , $HSCH_2CH_2CH_2Si(OCH_3)_3$ , $CH_3(CH_2)_7Si(OCH_3)_3$ ,

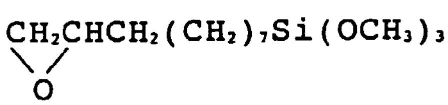 , 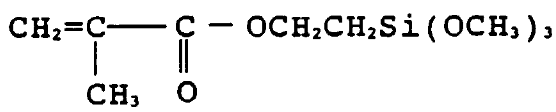

The amount of the organic silicon compound used is dictated by the specific surface area of metal oxide fine particles and the molecular occupying area of the organic silicon compound, and preferably ranges from about 0.05 to 5%, more preferably from about 0.1 to 1% by weight based on the weight of the metal oxide fine particles.

Upon injection, the organic silicon compound can be atomized with or without pre mixing with pure water, desirably pure water containing a strong base such as DBU.

Preferably, the metal oxide fine particles resulting from deflagration are blended in an amount of about 10 to 300 parts, more preferably about 50 to 200 parts by weight per 100 parts by weight of the silicone rubber base consisting essentially of the first to third components. Less than 10 parts of the filler would be ineffective for its purpose whereas more than 300 parts of the filler would reduce the flow of the silicone rubber composition during coating.

In addition to the metal oxide fine particles mentioned above, the silicone rubber composition of the invention may contain another filler or fillers, for example, reinforcing and non-reinforcing inorganic fillers, if desired, insofar as the benefits of the invention are not lost. The reinforcing inorganic fillers include fumed silica and fumed titanium dioxide, and the extending inorganic fillers include conventional fillers used in silicone rubber compositions of this type, for example, such as calcium carbonate, calcium silicate, titanium dioxide, ferric oxide and carbon black. Of course, the inorganic filler need not be blended in the silicone rubber composition of the invention. The inorganic filler is generally blended in an amount of from 0 to about 200 parts by weight per 100 parts by weight of the entire composition excluding the inorganic filler.

Also if desired, the silicone rubber composition of the invention may contain another additional component or components. For example, an epoxy-containing polysiloxane compound and ester siloxane compound may be blended for the purpose of increasing adhesion.

The silicone rubber composition of the invention may be formulated as a two-part composition in which the components are divided into two parts to be combined for curing as often the case with conventional silicone rubber compositions. Alternatively, a one - part composition is possible if a minor amount of a curing retarder such as acetylene alcohol is added.

EXAMPLES

Examples of the present invention are given below. All parts are by weight.

Example 1 and Comparative Example 1

A silicone rubber composition was prepared by blending and thoroughly agitating 100 parts of a dimethylpolysiloxane having two methylvinylsiloxane units in a molecule (viscosity 1,000 cs), 1.5 parts of a methylhydrogensiloxane having 1.0 mol/100 g of ≡ SiH bond, 0.05 parts of an octyl alcohol modified solution of chloroplatinic acid (platinum concentration 2% by weight), 100 parts of silica particles synthesized according to the method of US-A- 4,705,762 or JP-A- 255602/1985 by deflagration of metallic silicon (mean particle size 1 μm, designated Silica No. 1), and 1.0 part of an epoxy group-containing siloxane (obtained by partially adding 1 mol of allylglycidyl ether to 1 mol of 1,3,5,7-tetramethylcyclotetrasiloxane). The composition was heated at 150°C for 4 hours in a mold cavity of 150 mm × 100 mm × 2 mm thick, obtaining a cured product (Example 1).

A silicone rubber composition was prepared by the same procedure as above except that commercially available fused silica (mean particle size 5 μ m, particle size distribution 0.1 to 10 μ m, designated Silica No. 2) was used instead of Silica No. 1. A cured product was obtained therefrom (Comparative Example 1).

The silicone rubber compositions were measured for viscosity and electrical conductivity of extracted water, and the physical properties of the cured products were examined.

The results are shown in Table 1.

Table 1

| | | | Example 1 | Comparative Example 1 |
|---|---|---|---|---|
| Composition | Viscosity, poise | | 60 | 70 |
| | Conductivity of extracted water, μ s/cm | | 2.0 | 6.0 |
| Cured product (150°C/4 hours) | Specific gravity | | 1.30 | 1.30 |
| | Hardness, JIS-A | | 42 | 47 |
| | Elongation, % | | 210 | 130 |
| | Tensile strength, $kg/cm^2$ | | 22 | 20 |
| | Volume resistivity, Ω - cm | | $2.0 \times 10^{15}$ | $2.0 \times 10^{15}$ |
| | Dielectric strength, kV/mm | | 26.0 | 25.0 |
| | Dielectric constant @50 Hz | | 3.06 | 3.27 |
| | Dielectric dissipation factor @50 Hz | | $6.0 \times 10^{-4}$ | $1.0 \times 10^{-3}$ |
| | Heat resistance at 250 °C | Initial Hardness | 42 | 47 |
| | | Hardness after 72 hours | 42 | 57 |

Example 2 and Comparative Example 2

A silicone rubber composition was prepared by blending and thoroughly agitating 100 parts of a dimethylpolysiloxane having two methylvinylsiloxane units in a molecule (viscosity 1,000 cs), 1.5 parts of a methylhydrogensiloxane having 1.0 mol/100 g of ≡ SiH bond, 0.05 parts of an octyl alcohol modified solution of chloroplatinic acid (platinum concentration 2% by weight), 200 parts of Silica No. 1, and 1.0 part of an epoxy group-containing siloxane (obtained by partially adding 1 mol of allylglycidyl ether to 1 mol of 1,3,5,7 - tetramethylcyclotetrasiloxane). A cured product was obtained therefrom as in Example 1 (Example 2).

A silicone rubber composition was prepared by the same procedure as above except that Silica No. 2 was used instead of Silica No. 1. A cured product was obtained therefrom (Comparative Example 2).

The viscosity of the silicone rubber compositions and the physical properties of the cured products were examined. The results are shown in Table 2.

Table 2

| | | Example 2 | Comparative Example 2 |
|---|---|---|---|
| Composition | Viscosity, poise | 635 | 1200 |
| Cured product (150 °C/4 hours) | Specific gravity | 1.54 | 1.54 |
| | Hardness, JIS-A | 65 | 85 |
| | Elongation, % | 80 | 50 |
| | Tensile strength, $kg/cm^2$ | 39 | 50 |
| | Volume resistivity, Ω - cm | $2.0 \times 10^{15}$ | $2.0 \times 10^{15}$ |
| | Dielectric strength, kV/mm | 25.6 | 26.0 |
| | Dielectric constant @50 Hz | 3.10 | 3.17 |
| | Dielectric dissipation factor @50 Hz | $6.0 \times 10^{-4}$ | $4.0 \times 10^{-3}$ |

As seen from Tables 1 and 2, silicone rubber compositions filled with metal oxide fine particles according to the invention (Examples 1 and 2) show smooth flow and provide cured products having good electrical and mechanical properties, heat resistance, and humidity resistance as compared with those compositions filled with commercially available fused silica

(Comparative Examples 1 and 2).

There has been described a silicone rubber composition filled with metal oxide fine particles obtained by deflagration of metal powder dust and having high surface activity. The composition has high purity and smooth flow and cures to products having sufficient electrical and mechanical properties, heat resistance, and humidity resistance to form protective coats on electronic and electric parts. Electronic and electric parts coated with the composition in cured form are thus resistant against heat and humidity and remain reliable.

**Claims**

1. A curable silicone rubber composition comprising a silicone rubber base and a filler comprising metal oxide particles having a mean particle size in the range from 0.01 to 20μm, characterised in that the metal oxide particles are obtained by deflagration of metal powder in an oxygen - containing atmosphere.

2. A composition according to claim 1 in which the silicone rubber base includes an organopolysiloxane, an organohydrogenpolysiloxane and an addition reaction catalyst.

3. A composition according to claim 1 or claim 2 in which the metal powder is selected from aluminium, silicon, manganese, niobium, zirconium, titanium, magnesium and iron.

4. A composition according to claim 3 in which the metal powder is selected from aluminium, silicon and zirconium.

5. A composition according to any one of the preceding claims in which the metal oxide particles have a mean particle size in the range from 0.3μm to 15μm.

6. A composition according to any one of the preceding claims in which the metal oxide particles have been surface treated with an organic silicon compound for surface activation.

7. A silicone rubber product obtainable by curing a silicone rubber composition according to any one of claims 1 to 6.

8. Use of a composition according to any one of claims 1 to 6 for coating electric or electronic components.

9. A method of making a silicone rubber composition comprising mixing a silicone rubber base and a metal oxide filler with an average particle size in the range 0.01 to 20μm, characterised in that the metal oxide filler is made

by deflagrating metal powder in an oxygen-containing atmosphere.

## Patentansprüche

1. Härtbare Silikonkautschuk-Zusammensetzung, umfassend eine Silikonkautschuk-Basis und einen Füllstoff aus Metalloxid-Teilchen mit einer mittleren Teilchengröße im Bereich von 0,01 bis 20 µm, dadurch gekennzeichnet, daß die Metalloxid-Teilchen durch Deflagration von Metallpulver in einer sauerstoffhältigen Atmosphäre erhalten werden.

2. Zusammensetzung nach Anspruch 1, worin die Silikonkautschuk-Basis ein Organopolysiloxan, ein Organohydrogenpolysiloxan und einen Additionskatalysator umfaßt.

3. Zusammensetzung nach Anspruch 1 oder 2, worin das Metallpulver aus Aluminium, Silizium, Mangan, Niob, Zirkonium, Titan, Magnesium und Eisen ausgewählt ist.

4. Zusammensetzung nach Anspruch 3, worin das Metallpulver aus Aluminium, Silizium und Zirkonium ausgewählt ist.

5. Zusammensetzung nach einem der vorhergehenden Ansprüche, worin die Metalloxid-Teilchen eine mittlere Teilchengröße im Bereich von 0,3 bis 15 µm aufweisen.

6. Zusammensetzung nach einem der vorhergehenden Ansprüche, worin die Metalloxidteilchen mit einer organischen Siliziumverbindung zur Oberflächenaktivierung oberflächenbehandelt wurden.

7. Silikonkautschuk-Produkt, erhaltbar durch Härten einer Silikonkautschuk-Zusammensetzung nach einem der Ansprüche 1 bis 6.

8. Verwendung einer Zusammensetzung nach einem der Ansprüche 1 bis 6 zum Beschichten elektrischer oder elektronischer Bauteile.

9. Verfahren zur Herstellung einer Silikonkautschuk-Zusammensetzung, umfassend das Vermischen einer Silikonkautschuk-Basis und eines Metalloxid-Füllstoffs mit einer durchschnittlichen Teilchengröße im Bereich von 0,01 bis 20 µm, dadurch gekennzeichnet, daß der Metalloxid-Füllstoff durch Deflagration von Metallpulver in einer sauerstoffhältigen Atmosphäre erzeugt wird.

## Revendications

1. Composition de caoutchouc de silicone polymérisable comprenant une base de caoutchouc de silicone et une charge comprenant des particules d'oxyde métallique ayant une taille moyenne de particules dans l'intervalle de 0,01 à 20 µm, caractérisée en ce que les particules d'oxyde métallique sont obtenues par déflagration d'une poudre métallique dans une atmosphère contenant de l'oxygène.

2. Composition selon la revendication 1 dans laquelle la base de caoutchouc de silicone inclut un organopolysiloxane, un organohydrogénopolysiloxane et un catalyseur de réaction d'addition.

3. Composition selon la revendication 1 ou la revendication 2 dans laquelle la poudre métallique est choisie parmi l'aluminium, le silicium, le manganèse, le niobium, le zirconium, le titane, le magnésium et le fer.

4. Composition selon la revendication 3 dans laquelle la poudre métallique est choisie parmi l'aluminium, le silicium et le zirconium.

5. Composition selon l'une quelconque des revendications précédentes dans laquelle les particules d'oxyde métallique ont une taille moyenne de particules dans l'intervalle de 0,3 µm à 15 µm.

6. Composition selon l'une quelconque des revendications précédentes dans laquelle les particules d'oxyde métallique ont été traitées en surface avec un composé de silicium organique pour une activation de surface.

7. Produit de caoutchouc de silicone pouvant être obtenu par polymérisation d'une composition de caoutchouc de silicone selon l'une quelconque des revendications 1 à 6.

8. Utilisation d'une composition selon l'une quelconque des revendications 1 à 6 pour revêtir des composants électriques ou électroniques.

9. Méthode de fabrication d'une composition de caoutchouc de silicone comprenant le mélange d'une base de caoutchouc de silicone et d'une charge d'oxyde métallique ayant une taille moyenne de particules dans l'intervalle de 0,01 à 20 µm, caractérisée en ce que la charge d'oxyde métallique est fabriquée par déflagration d'une poudre métallique dans une atmosphère contenant de l'oxygène.